# EUROPÄISCHE PATENTSCHRIFT

(11) **EP 2 433 239 B1**
(45) Veröffentlichungstag und Bekanntmachung des Hinweises auf die Patenterteilung: **23.01.2019**
(21) Anmeldenummer: 10711558.6
(22) Anmeldetag: 04.03.2010
(51) Int. Cl.: H04L 9/06, G06F 21/73

(54) **ORIGINALKENNUNG, VERFAHREN ZUR BEREITSTELLUNG DER ORIGINALKENNUNG SOWIE VERWENDUNG DER ORIGINALKENNUNG**
UNIQUE IDENTIFIER, METHOD FOR PROVIDING SAID UNIQUE IDENTIFIER AND USE OF SAID UNIQUE IDENTIFIER
CODE ORIGINAL, PROCÉDÉ DE GÉNÉRATION ET UTILISATION DUDIT CODE ORIGINAL

(30) Priorität: 20.05.2009 DE 102009022233
(43) Veröffentlichungstag der Anmeldung: 28.03.2012
(73) Patentinhaber: Jentzsch, Rolf, 04159 Leipzig (DE); Feustel, Dietmar, 04451 Panitzsch (DE); Topf, Birgit, 04435 Schkeuditz (DE)
(72) Erfinder: Jentzsch, Rolf, 04159 Leipzig (DE); Feustel, Dietmar, 04451 Panitzsch (DE); Topf, Birgit, 04435 Schkeuditz (DE)
(74) Vertreter: Hecht, Jan-David
(86) Internationale Anmeldenummer: PCT/EP2010/001356
(87) Internationale Veröffentlichungsnummer: WO 2010/133266

(56) Entgegenhaltungen:
- WO-A1-2007/113464
- WO-A1-2008/148623
- WO-A2-2005/024697
- DE-A1-102006 040 228
- US-A1- 2006 235 805
- US-A1- 2009 097 661
- SCHNEIER B: "Applied Cryptography, PASSAGE" APPLIED CRYPTOGRAPHY: PROTOCOLS, ALGORITHMS AND SOURCE CODE IN C, WILEY, NEW YORK, NY, US, 1. Januar 1994 (1994-01-01), Seiten 30-37,42, XP002388093
- BRUCE SCHNEIER ED - SCHNEIER B: "Applied Cryptography, One-Time Pads" 1. Januar 1996 (1996-01-01), APPLIED CRYPTOGRAPHY, PROTOCOLS, ALGORITHMS, AND SOURCE CODE IN C, JOHN WILEY & SONS, INC, NEW YORK, PAGE(S) 15 - 17 , XP002495601 ISBN: 978-0-471-11709-4 das ganze Dokument

## Beschreibung

Die vorliegende Erfindung betrifft eine Verfahren zur Herstellung einer Originalkennung, Verwendungen dieser Originalkennung, die Originalkennung selbst, sowie eine Einrichtung und ein Computerprogrammprodukt zur Durchführung des Verfahrens.

Produktpiraterie hat im Wirtschaftsverkehr einen bedeutenden Stellenwert eingenommen. Nach aktuellen Angaben entfallen durch Produktpiraterie, illegale Überproduktion, Parallel- und Re-Importe mittlerweile bereits 10 % des Welthandels auf Plagiate oder Fälschungen, was einem internationalen Schaden von über 300 Milliarden Euro gleichgesetzt wird. In Deutschland sind nach dem Verband deutscher Maschinen- und Anlagenbau rund zwei Drittel der Hersteller von Investitionsgütern von Produktpiraterie betroffen.

Diese Produktpiraterie hat natürlich auch bedeutende Auswirkungen auf den Arbeitsmarkt, wobei allein in Deutschland nach Schätzungen des Justizministeriums jährlich ca. 50.000 Arbeitsplätze auf Grund von Produktpiraterie verloren gehen. Im gesamteuropäischen Raum sollen insgesamt sogar 300.000 Arbeitsplätze betroffen sein.

Dabei sind die Hersteller von Investitionsgütern vor allem dadurch durch Produktpiraterie bedroht, dass sie erhebliche Investitionsvorleistungen erbringen mussten, um ihre Qualitätsprodukte zu entwickeln, zu testen, herzustellen und zu bewerben. Diese Investitionen hat ein Plagiateur nicht, so dass er sich an den Erfolg des Originals anhängend erhebliche Kosten spart und damit wesentlich höhere Gewinnspannen hat - zumal wenn die Plagiate minderwertiger Qualität sind - oder zu erheblich günstigeren Preisen anbieten kann.

Eine weitere Bedrohung liegt darin, dass diese Hersteller ihren guten Ruf verlieren, wenn Plagiate minderwertiger Qualität und Sicherheit auf den Markt gelangen, aber nicht gleich als Plagiate erkennbar sind, sondern den Original-Herstellern zugeordnet werden.

Ein weiteres großes Problem neben den wirtschaftlichen Schäden der Produktpiraterie besteht darin, dass unter Umständen mit Plagiaten auch Unfall- und Gesundheitsgefahren verbunden sind. Dies ist insbesondere dann der Fall, wenn Plagiate nicht nach den gleichen Standards gefertigt werden wie die Originale. Zu nennen ist hier besonders die Arzneimittelbranche, aber auch in anderen sicherheitsrelevanten Branchen, wie dem Maschinenbau, können minderwertige Plagiate gravierende Folgen haben.

Das Ziel der Hersteller von Investitionsgütern besteht somit darin, Produktpiraterie weitestgehend zu verhindern. Hierzu wurden verschiedene Schutztechnologien bzw. technische Sicherungsmittel entwickelt, wie z. B. Hologramme, Sicherheitsetiketten, Mikrofarbcodes, digitale Wasserzeichen und dgl. mehr, wobei das gegenwärtige Hauptaugenmerk darauf liegt, Produktkennzeichnungen zu entwickeln, deren Merkmale technisch nicht fälschbar sind.

Beispielsweise werden für modernes Papiergeld eine Vielzahl von Sicherheitsmerkmalen verwendet, die die Fälschung unmöglich machen sollen. Dazu gehören am Beispiel von Euro-Banknoten, die Verwendung von Spezialpapier, optischen Sicherheitsmerkmalen, wie Wasserzeichen, Anti-Kopierraster, Melierfasern, Sicherheitsfaden, Sonderfarben, Irisdruck, Folienelementen, Hologrammen, Mikro-Perforation, Mikro-Schrift, fluoreszierende Farben, optisch veränderliche Tinte, Glanzeffekte, Durchsichtfenster und Durchsichtregister, haptische Sicherheitsmerkmale wie Papiergefühl und Prägung sowie akustische Sicherheitsmerkmale hinsichtlich des Klangs der Banknoten beim Knüllen oder Reiben. Zusätzlich werden noch von Automaten erkennbare Merkmale eingesetzt, wie Infrarotfarbe, magnetische Elemente, elektrische Leitfähigkeit und dgl. mehr.

Nachteilig an diesen Produktkennzeichnungen ist es aber, dass ihre Fälschungssicherheit immer nur solange besteht, solang bezüglich der Produktkennzeichnung ein Technologievorsprung gegenüber den Produktpiraten gegeben ist, der jedoch erfahrungsgemäß nur von kurzer Dauer ist. Außerdem sind solche vielschichtigen Produktkennzeichnungen relativ kostenintensiv und somit nur bei hochpreisigen Produkten sinnvoll einsetzbar. Schließlich lässt sich auch eine Fälschung von besonders sicheren Produktkennzeichnungen nicht vollständig verhindern, zumal es bei sehr komplexen Produktkennzeichnungen sowohl für Verbraucher als auch für Verkäufer sehr schwierig ist, zu erkennen, ob es sich um eine originale Produktkennzeichnung handelt oder um eine Fälschung.

US 2009/097661 zeigt einen Algorithmus, der einen Hauptschlüssel mit einem zufällig erstellten Sitzungsschlüssel mischt.

Die Aufgabe der vorliegenden Erfindung besteht daher darin, Originalkennungen bereitzustellen, die Produktfälschungen weitgehend verhindern, wobei die Originalkennung in ihrer Herstellung sehr kostengünstig sein soll. Insbesondere soll sich die Originalkennung nicht nur zur Verwendung als Produktkennzeichnung eignen, sondern auch zum Autorisierungsnachweis, beispielsweise bei der Sicherung von räumlichen oder elektronischen Zugängen, wie Türen, Computerprogrammen und dgl.

Diese Aufgabe wird gelöst mit dem Verfahren zur Bereitstellung einer Originalkennung nach Anspruch 1 der Verwendung der Originalkennung zur Produktkennzeichnung nach Anspruch 9, der Verwendung der Produktkennzeichnung zur Autorisierung nach Anspruch 12, der Originalkennung nach Anspruch 14 und einem Computerprogrammprodukt nach Anspruch 15. Vorteilhafte Weiterbildungen sind in den abhängigen Unteransprüchen angegeben.

Die Erfinder haben erkannt, dass der Weg, das Fälschen an sich zu erschweren, ein kostenintensiver und auf Grund des technischen Fortschritts auch aussichtsloser Weg ist, um Produktfälschungen zu verhindern bzw. Autorisierungen abzusichern. Deshalb wird erfindungsgemäß ein anderer Weg gegangen, der darin besteht, bei der Motivation des Fälschers anzusetzen, nämlich seinen Gewinn soweit zu minimieren, dass kein Anlass mehr für eine Fälschung gegeben ist. Im Einzelfall könnte also weiterhin eine Produkt-Fälschung möglich sein, jedoch sind die Kosten für diese Fälschungen im großen Stil so hoch, dass hierfür kein Anlass mehr besteht. Das Erschleichen einer Autorisierung ist dagegen ganz unmöglich gemacht.

Das erfindungsgemäße Verfahren zur Bereitstellung einer Originalkennung für einen Gegenstand, wie ein Produkt, eine Autorisierung für einen Zugang oder dgl., zeichnet sich dadurch aus, dass es zumindest die folgenden Schritte umfasst: (a) zur Verfügung stellen eines Hauptschlüssels, (b) Erzeugung eines ersten zufälligen Sitzungsschlüssels und (c) Mischen des Hauptschlüssels mit dem ersten zufälligen Sitzungsschlüssel.

Dieses Ziel wird also dadurch erreicht, dass die Originalkennung im Wege einer Verschlüsselung erzeugt wurde, wobei ein Hauptschlüssel zur Verfügung gestellt wird und nach Erzeugung eines ersten zufälligen Sitzungsschlüssels der Hauptschlüssel mit diesem ersten zufälligen Sitzungsschlüssel gemischt wird. Dadurch kann beispielsweise der Hersteller von Investitionsgütern basierend auf einem einzigen Hauptschlüssel, beispielsweise einer physikalischen Zufallszeichenfolge, mit Hilfe von ersten zufälligen Sitzungsschlüsseln zahlreiche Originalkennungen für die zu verkaufenden Produkte bereitstellen. Der Hersteller muss nun nur noch diese ersten zufälligen Sitzungsschlüssel abspeichern und kann dabei gegebenenfalls auch noch registrieren, welchen Vertriebsweg das mit dem entsprechenden Sitzungsschlüssel und der daraus hergestellten Originalkennung versehene Produkt genommen hat. Ein Wiederverkäufer oder Verbraucher des Produkts kann dann beispielsweise durch Anruf bei einer Hotline des Herstellers leicht herausfinden, ob es sich um ein Originalprodukt handelt, wozu er die Originalkennung an den Hersteller übermittelt, und dieser überprüft, ob diese Originalkennung sich mit dem vorgegebenen Hauptschlüssel und den gespeicherten Sitzungsschlüsseln erzeugen lässt und ob gegebenenfalls dem verwendeten Sitzungsschlüssel ein Vertriebsweg zugeordnet ist, der dem Vertriebsweg entspricht, den der Zwischenhändler bzw. Endverbraucher angibt.

Somit lässt sich zwar die einzelne Produkt-Fälschung nicht verhindern, da eine solche Originalkennung natürlich einfach kopiert werden könnte, jedoch würde eine Fälschung im großen Stil schnell auffliegen, da jede Originalkennung nur einmal vergeben wird.

Insbesondere für die Verwendung der Originalkennung zur Autorisierung kann in Schritt (b) vorteilhaft vorgesehen sein, dass der erste zufällige Sitzungsschlüssel dem Verwender verschlüsselt zur Verfügung gestellt wird. Dabei kann es sich bei dem Verwender um eine natürliche Person handeln aber auch um eine Vorrichtung oder Einrichtung. Zur Verschlüsselung des ersten zufälligen Sitzungsschlüssels wird ein erster Verwenderschlüssel bereitgestellt, und der erste zufällige Sitzungsschlüssel wird mit dem ersten Verwenderschlüssel gemischt. Der erste Verwenderschlüssel ist dabei auf den vorgesehenen Verwender abgestimmt und nur dieser Verwender oder eine Gruppe von berechtigten Verwendern hat Kenntnis von diesem ersten Verwenderschlüssel. Der Verwender nimmt dann den ihm zugeteilten Verwenderschlüssel und bestimmt den ersten zufälligen Sitzungsschlüssel durch Entmischen mit seinem zugeteilten Verwenderschlüssel. Wenn sein Verwenderschlüssel mit dem ersten Verwenderschlüssel übereinstimmt, dann kann der Verwender den ersten zufälligen Sitzungsschlüssel bestimmen und daraus die Originalkennung erzeugen.

In einer bevorzugten Ausgestaltung ist vorgesehen, dass weiterhin folgende Schritte vorgenommen werden: d) zur Verfügung stellen eines Gegenstandsschlüssels und
e) Mischen des Gegenstandsschlüssels mit dem Ergebnis von Schritt c), wobei bevorzugt weiterhin das Ergebnis von Schritt c) oder Schritt d) auf eine dem Gegenstandsschlüssel entsprechende Länge mit einem vorgegebenen Reduktionsalgorithmus reduziert wird. Es ist dabei also vorgesehen, dass ein Gegenstandsschlüssel zur Verfügung gestellt wird und das Ergebnis der Mischung von ersten zufälligem Sitzungsschlüssel und Hauptschlüssel mit dem Gegenstandsschlüssel gemischt wird. Auf diese Weise kann jeder Originalkennung eine Information über das Produkt beigefügt werden, wobei diese Informationen insbesondere Informationen über die Art, die Menge, den Vertriebsweg und dgl. sind. In einer vorteilhaften Weiterbildung ist vorgesehen, dass die Länge der Originalkennung auf eine den Gegenstandsschlüssel entsprechende Länge mit Hilfe eines vorgegebenen Reduktionsalgorithmus reduziert wird. Unabhängig von dem Gegenstandsschlüssel kann natürlich auch das Ergebnis des Mischens des Hauptschlüssels mit dem ersten zufälligen Sitzungsschlüssel schon auf eine bestimmte Länge reduziert werden mit Hilfe eines vorgegebenen Reduktionsalgorithmus.

In einer weiteren bevorzugten Ausgestaltung ist vorgesehen, dass weiterhin folgende Schritte vorgenommen werden: f) zur Verfügung stellen eines zweiten Verwenderschlüssel, der bevorzugt identisch dem ersten Verwenderschlüssel ist und der charakteristisch ist für die Benutzung der Originalkennung, insbesondere dessen Verwender, g) Erzeugung einer Kennung durch Mischung des ersten zufälligen Sitzungsschlüssels und des zweiten Verwenderschlüssel und h) Verbindung der Ergebnisse von Schritt c) oder Schritt e) und der Kennung zur Originalkennung, wobei bevorzugt die Kennung dem Ergebnis voran- oder nachgestellt wird. Es ist dabei also vorgesehen, dass ein zweiter Verwenderschlüssel zur Verfügung gestellt wird, der charakteristisch ist für die Benutzung der Originalkennung, insbesondere dessen Verwender, beispielsweise also für den Hersteller des Produkts. Mit Hilfe dieses zweiten Verwenderschlüssels, der bevorzugt identisch mit dem ersten Verwenderschlüssels ist, wird eine Kennung durch Mischen des ersten zufälligen Sitzungsschlüssels und des zweiten Verwenderschlüssels erzeugt. Diese Kennung wird dann mit dem Ergebnis der Mischung von Hauptschlüssel und ersten zufälligen Sitzungsschlüssel bzw. der Mischung von Hauptschlüssel, ersten zufälligen Sitzungsschlüssel und Gegenstandsschlüssel verbunden, um die Originalkennung zu bilden. Bevorzugt wird dabei die Kennung voran- oder nachgestellt, wobei allerdings auch vorgegebene Mischalgorithmen verwendet werden können. Auf diese Weise muss der Hersteller nicht mehr die einzelnen ersten zufälligen Sitzungsschlüssel speichern, sondern der verwendete erste zufällige Sitzungsschlüssel kann mit Hilfe des zweiten Verwenderschlüssels, der dem Hersteller bekannt ist, jeder Originalkennung zugeordnet werden, wodurch leicht ermittelt werden kann, ob die Originalkennung echt und in Bezug auf das Produkt, den Autorisierungsversuch oder dgl. zulässig ist.

Besonders bevorzugt ist vorgesehen, dass weiterhin folgende Schritte vorgenommen werden: i) das Ergebnis aus Schritt c) oder e) in zwei Teillängen aufgeteilt wird, wobei eine Teillänge mit der anderen Teillänge gemischt wird und
j) das Ergebnis aus Schritt c) oder e) wird mit dem Ergebnis von Schritt i) gemischt. Natürlich können auch die anderen Schlüssel und/oder Mischergebnisse zu modifiziert werden. Es werden also Hauptschlüssel, erster Verwenderschlüssel, zweiter Verwenderschlüssel und/oder Gegenstandsschlüssel und/oder die vorgenannten Ergebnisse von Mischungen weiter modifiziert. Dies erfolgt bevorzugt dadurch, dass der entsprechende Schlüssel bzw. das entsprechende Mischergebnis in zwei Teillängen aufgeteilt wird und die eine Teillänge mit der anderen Teillänge gemischt wird. Dieses Mischergebnis kann dann wieder mit der Ausgangsgröße gemischt werden. Dadurch wird die Sicherheit der Originalkennung weiter erhöht.

In einer besonders bevorzugten Weiterbildung erfolgt die Aufteilung in zwei Teillängen dadurch, dass eine der beiden Teillängen nur Zeichen oder Bitfolgen enthält, die in einem bereitgestellten zweiten zufälligen Sitzungsschlüssel enthalten sind, und die andere der beiden Teillängen nur Zeichen oder Bitfolgen enthält, die nicht in dem zweiten zufälligen Sitzungsschlüssel enthalten sind. Besonders vorteilhaft ist es dann, wenn der zweite zufällige Sitzungsschlüssel identisch ist mit dem ersten zufälligen Sitzungsschlüssel. Dann kann bei Verwendung eines Verwenderschlüssels eine Abspeicherung der Sitzungsschlüssel unterbleiben.

In einer vorteilhaften Ausgestaltung ist vorgesehen, dass zumindest bei einem Mischvorgang das Mischen als logische XOR-Codierung oder bevorzugt als logisch erweiterte XOR-Codierung erfolgt.

Zweckmäßig sind der erste zufällige Sitzungsschlüssel, der erste Verwenderschlüssel, der zweite Verwenderschlüssel und/oder der Gegenstandsschlüssel > 1 Bit, bevorzugt ≥ 24 Byte und insbesondere ≥ 32 Byte groß.

Weiterhin ist es zweckmäßig, wenn der Hauptschlüssel > 100 Byte, bevorzugt ≥ 1 MByte und insbesondere ≥ 100 MByte ist. Dadurch ist der Mischungsraum sehr groß, so dass zufällige Übereinstimmungen von gefälschten Originalkennungen ausgeschlossen werden können.

In Bezug vor allem auf die Verfahrensschritte bei der Bereitstellung einer Originalkennung, die Durchführung der Teilung, das Mischen mit logischer XOR-Codierung oder logisch erweiterter XOR-Codierung wird auf die DE 10 2009 022 233.2 Bezug genommen, deren Inhalt vollumfänglich in die vorliegende Erfindungsoffenbarung aufgenommen wird. Diese DE 10 2009 022 233.2 beschreibt dabei ein Verfahren zur Verwendung einer Zeichenkette und dieses Verfahren kann für das Verfahren zur Bereitstellung einer Originalkennung eingesetzt werden. Alle Verfahrensschritte der DE 10 2009 022 233.2 sind also auch vorliegend verwendbar und sollen ausdrücklich Bestandteil der vorliegenden Erfindung sein. Ebenso sind auch alle in der DE 10 2009 022 233.2 beschriebenen Vorteile solche, die auf die vorliegende Erfindung zutreffen.

Selbstständiger Schutz wird beansprucht für die Verwendung der erfindungsgemäß hergestellten Originalkennung für die Kennzeichnung eines Produkts oder dgl. Dabei sind der Hauptschlüssel und ggf. der Verwenderschlüssel an einer Überprüfungsvorrichtung hinterlegt und zur Überprüfung der Originalkennung auf Echtheit wird bestimmt, ob die Originalkennung unter Verwendung des hinterlegten Hauptschlüssels und ggf. des hinterlegten Verwenderschlüssels erzeugbar ist. In einer bevorzugten Ausgestaltung dieser Verwendung ist vorgesehen, dass überprüft wird, ob der in der Originalkennung verwendete Gegenstandsschlüssel mit den Angebots-, Vertriebs- und/oder Verkaufsmodalitäten und dgl. für das Produkt übereinstimmt. Dabei wird bevorzugt überprüft, ob der Gegenstandsschlüssel mit dem für das Produkt festgestellten Vertriebsweg übereinstimmt.

Besonders vorteilhaft ist das Produkt oder dgl. in einer Verpackung angeordnet, wobei zumindest eine erste Originalkennung auf dem Produkt selbst oder dgl. und zumindest eine zweiter Originalkennung auf der Verpackung vorgesehen sind, wobei sich die erste Originalkennung von der zweiten Originalkennung unterscheidet. Hierdurch wird die Fälschungssicherheit noch einmal bedeutend erhöht, da ein Fälscher nun für ein Produkt mehrere Originalkennungen fälschen müsste.

Weiterhin wird selbstständiger Schutz für die Verwendung der erfindungsgemäß hergestellten Originalkennung für die Autorisierung der Zugangsberechtigung zu einem Zugang, insbesondere zu einem Bereich, einem Fahrzeug, einem Programm oder dgl. beansprucht. Diese Verwendung zeichnet sich dadurch aus, dass der Hauptschlüssel und gegebenenfalls der erste und/oder zweite Verwenderschlüssel an einer dem Zugang zugeordneten Überprüfungsvorrichtung hinterlegt sind und die Originalkennung von dem den Zugang nachsuchenden Verwender bereitgehalten wird, wobei zur Überprüfung der Zugangsberechtigung zu dem Zugang durch die Überprüfungsvorrichtung bestimmt wird, ob die Originalkennung unter Verwendung des hinterlegten Hauptschlüssels und gegebenenfalls des hinterlegten ersten und/oder zweiten Verwenderschlüssels erzeugbar ist.

In einer besonders bevorzugten Ausgestaltung ist vorgesehen, dass dem Verwender ein erstes elektronisches Mittel zugeordnet ist, in dem der Hauptschlüssel hinterlegt ist, und wobei dem Zugang ein zweites elektronisches Mittel zugeordnet ist, das den ersten zufälligen Sitzungsschlüssel erzeugt und diesen Sitzungsschlüssel bzw. das Ergebnis einer Mischung des ersten zufälligen Sitzungsschlüssels und des ersten Verwenderschlüssels dem dem Verwender zugeordneten ersten elektronischen Mittel übermittelt, wobei das erste elektronische Mittel aus dem ersten zufälligen Sitzungsschlüssel und dem Hauptschlüssel die Originalkennung erzeugt.

Außerdem wird unabhängiger Schutz beansprucht für die Originalkennung selbst, die nach dem erfindungsgemäßen Verfahren hergestellt wurde und die als ein Barcode insbesondere als 1- oder 2-dimensionaler Barcode, oder eine Oberflächenstrukturierung ausgebildet ist oder die in einem elektronischen Speicher, insbesondere einem RFED-Chip angeordnet ist.

Selbständiger Schutz wird beansprucht für eine Einrichtung die angepasst ist, das erfindungsgemäße Verfahren auszuführen.

Die Erfindung kann in Form einer völligen Hardware-Ausgestaltung, einer völligen Software-Ausgestaltung oder einer Ausgestaltung, die sowohl Hardware- als auch Software-Elemente enthält, verwirklicht werden. In einer bevorzugten Ausgestaltung ist die Erfindung in Software implementiert, die Firmware, systemeigene Software, Microcode und dgl. umfasst, jedoch nicht darauf beschränkt ist.

Weiterhin kann die Erfindung in Gestalt eines Computerprogrammprodukts verwirklicht werden, das von einem computernutzbaren oder computerlesbaren Medium zugänglich ist und einen Programmcode für die Benutzung durch oder für die Benutzung in Verbindung mit einem Computer oder jeden Befehlsausführungssystem bereitgestellt ist. Daher wird auch selbständiger Schutz beansprucht für ein Computerprogrammprodukt, das auf einem für einen Computer lesbaren Medium gespeichert ist und für den Computer lesbare Programmmittel umfasst, die den Computer veranlassen, das erfindungsgemäße Verfahren auszuführen, wenn die Programmmittel auf dem Computer ausgeführt werden.

Für die Zwecke dieser Beschreibung können computernutzbare oder computerlesbare Medien alle Einrichtungen oder Vorrichtungen sein, die das Programm für die Benutzung durch oder die Benutzung in Verbindung mit dem Befehlsausführungssystem, der Vorrichtung oder der Einrichtung enthalten, speichern, kommunizieren, verbreiten oder transportieren.

Das Medium kann ein elektronisches, magnetisches, optisches, elektromagnetisches, Infrarot- oder Halbleitersystem (oder Vorrichtung oder Einrichtung) sein oder ein Ausbreitungsmedium. Beispiele eines computerlesbaren Mediums umfassen einen Halbleiter oder Feststoffspeicher, Magnetband, eine entfernbare Computerdiskette, einen Random Access Memmory (RAM), einen Read-only Memmory (ROM), eine feste magnetische Disk und eine optische Disk. Gegenwärtige Beispiele von optischen Disks umfassen Compaktdisk-Read-only Memmory (CD-ROM), Compaktdisk-Read/Write (CD-R/W) und DVD.

Ein Datenverarbeitungssystem, das geeignet ist, den Programmcode zu speichern und/oder auszuführen, umfasst wenigstens einen Prozessor, der direkt oder indirekt mit zumindest einem Speicherelement durch einen Systembus verbunden ist. Das Speicherelement kann lokalen Speicher umfassen, der während der aktuellen Ausführung des Programmcodes tätig wird, Massenspeicher und Pufferspeicher, der eine temporäre Speicherung von wenigstens einigen Programmcodes bereitstellt, um die Anzahl an Abrufen des Codes vom Massenspeicher während der Ausführung zu reduzieren.

Eingabe/Ausgabe- oder I/O-Einrichtungen, die Tastaturen, Displays, Zeigeeinrichtungen etc. umfassen können, jedoch nicht darauf limitiert sind, können mit dem System entweder direkt oder durch zwischengeschaltete I/O-Controller an das System angekoppelt sein.

Netzwerkadapter können ebenfalls mit dem System verbunden sein, um zu ermöglichen, dass das Daten verarbeitende System mit anderen Datenverarbeitungssystemen oder entfernten Druckern oder Speichereinrichtungen durch zwischengeschaltete private oder öffentliche Netzwerke angekoppelt wird. Modems, Kabelmodems oder Ethernet-Karten sind in diesem Zusammenhang nur einige Beispiele der gegenwärtig verfügbaren Typen von Netzwerkadaptern.

Die Merkmale der vorliegenden Erfindung sowie weitere Vorteile werden nun anhand der Beschreibung bevorzugter Ausführungsbeispiele anhand der Figuren verdeutlicht werden. Dabei zeigen:
- Fig. 1: eine erste bevorzugte Ausgestaltung zur Erzeugung des ersten Teils der Originalkennung,
- Fig. 2a, 2b: eine erste bevorzugte Ausgestaltung zur Erzeugung des zweiten Teils der Originalkennung,
- Fig. 3: die aus dem ersten Teil gemäß Fig. 1 und dem zweiten Teil gemäß Fig. 2a, 2b erzeugte Originalkennung,
- Fig. 4: den bei der Erzeugung des dritten Teils der Originalkennung nach Fig. 2 verwendeten Mischalgorithmus,
- Fig. 5: den im Mischalgorithmus nach Fig. 3 verwendeten Teilungsalgorithmus,
- Fig. 6: die Verwendung der erfindungsgemäßen Originalkennung zur Autorisierung eines Zugangs und
- Fig. 7: die in der Verwendung nach Fig. 6 benutzte zweite bevorzugte Ausgestaltung zur Erzeugung der Originalkennung.

Die in den nachfolgend beschriebenen Figuren aufgezeigten alphanumerischen Zeichenfolgen und Barcodes sind nur beispielhaft zur grafischen Erläuterung angegeben. Sie folgen nicht den angegebenen Mischungsalgorithmen.

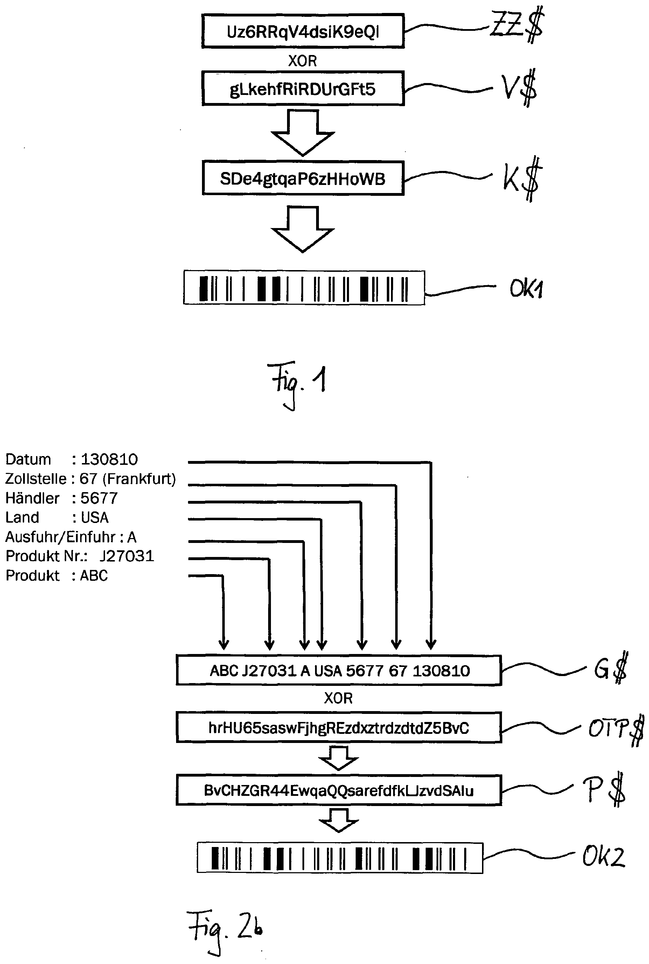

In Fig. 1 ist rein schematisch die Herstellung des ersten Teils OK1 der Originalkennung OK nach einer ersten bevorzugten Ausgestaltung dargestellt. Zu erkennen ist, dass der erste zufällige Sitzungsschlüssel ZZ$ mit einem Verwenderschlüssel V$ mittels einer XOR-Codierung gemischt wird, um einen Kennungsschlüssel K$ zu erzeugen. Der Kennungsschlüssel K$ wird anschließend in einen 1-dimensionalen Barcode umgewandelt, der den ersten Teil OK1 der erfindungsgemäßen Originalkennung OK bildet.

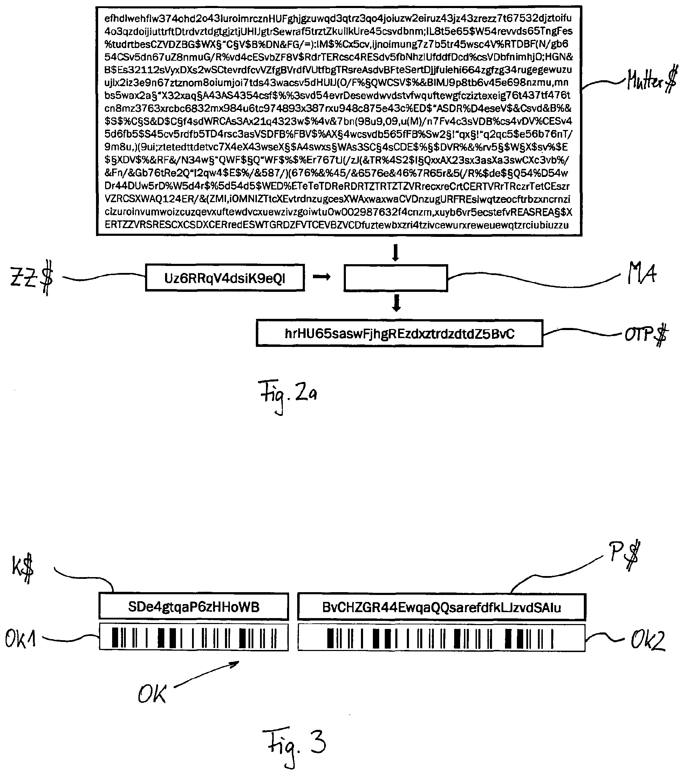

In Fig. 2a und 2b ist rein schematisch die Erzeugung des zweiten Teils OK2 der Originalkennung OK nach der ersten bevorzugten Ausgestaltung dargestellt. Zu erkennen ist, dass der Hauptschlüssel Mutter$ mit dem ersten zufälligen Sitzungsschlüssel ZZ mit Hilfe eines besonderen Mischalgorithmus MA gemischt wird, um einen One-time-Pad Schlüssel OTP$ zu bilden.

Wie aus Fig. 2b zu erkennen ist, wird dieser One-time-Pad Schlüssel OTP$ mit einem Gegenstandsschlüssel G$ mittels einer logischen XOR-Codierung gemischt wird, wodurch ein Produktschlüssel P$ entsteht. Auch dieser Produktschlüssel P$ wird in einen 1-dimensionalen Barcode umgewandelt und bildet den zweiten Teil OK2 der Originalkennung OK.

In diesem bevorzugten Ausführungsbeispiel ist der Hauptschlüssel Mutter$ 100 MB groß, der Verwenderschlüssel V$ genauso wie der erste zufällige Sitzungsschlüssel ZZ$ ist 16 Byte groß.

Die Originalkennung OK selbst wird dann dadurch gebildet, dass der erste Teil OK1 der Originalkennung OK dem zweiten Teil OK2 der Originalkennung OK vorangestellt wird und sich so ein einheitlicher Barcode OK ergibt, so wie dies in Fig. 3 dargestellt ist. Die beiden Teile OK1, OK2 des Originalkennung OK können dabei, wie in Fig. 3 dargestellt räumlich abgesetzt dargestellt sein oder auch direkt ineinander übergehend, so dass keine Trennung erkennbar ist.

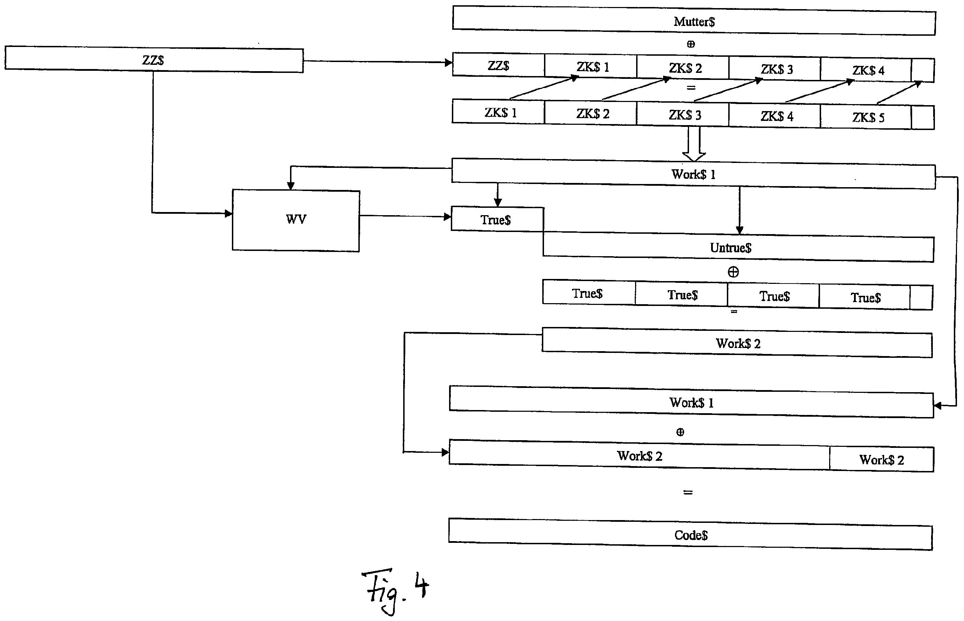

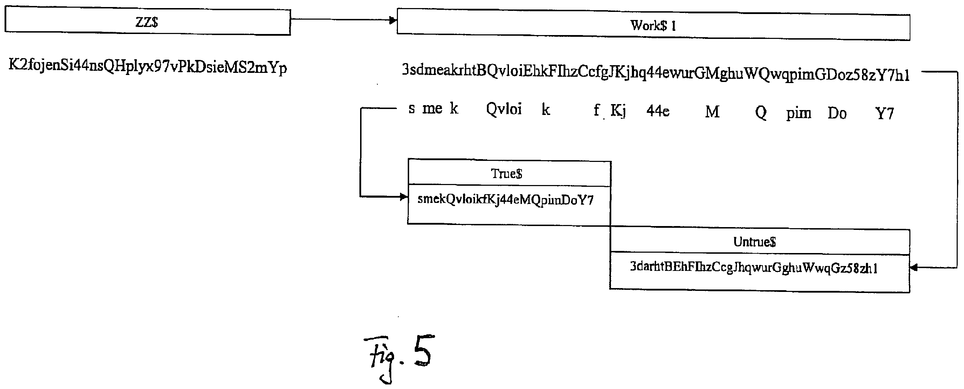

In Fig. 4 ist in rein schematischer Weise der in dem bevorzugten Ausführungsbeispiel nach Fig. 2a verwendete Mischalgorithmus MA dargestellt, wobei Fig. 5 den in diesem Mischalgorithmus verwendeten Teilungsalgorithmus WV rein schematisch zeigt. Der in Fig. 5 gezeigte Sitzungsschlüssel ZZ$ ist nur beispielhaft dargestellt und entspricht nicht dem in den Fig. 1, 2a und 2b verwendetem Sitzungsschlüssel ZZ$, da in Fig. 5 nur das Prinzip des Teilungsalgorithmus WV beschrieben werden soll.

In Fig. 4 ist zu erkennen, dass der Hauptschlüssel Mutter$ mit dem ersten zufälligen Sitzungsschlüssel ZZ$ logisch erweitert XOR codiert wird. Dies erfolgt dadurch, dass die ersten 16 Byte des Hauptschlüssels Mutter$ mit dem Sitzungsschlüssel ZZ$ logisch XOR codiert werden, wodurch als Ergebnis ein erster Teilstring ZK$ 1 entsteht, der ebenfalls eine Länge von 16 Byte aufweist. Dieser erste Teilstring ZK$ 1 wird dann wiederum verwendet, um einen weiteren Teil des Hauptschlüssels Mutter$ XOR zu codieren. Dazu werden die nächsten 16 Byte des Sitzungsschlüssels Mutter$ verwendet und es entsteht im Ergebnis ein zweiter Teilstring ZK$ 2, der seinerseits für die XOR Codierung der nächsten 16 Byte des Hauptschlüssels Mutter$ verwendet wird. Dieses Prozedere wird, wie in Fig. 4 angedeutet, solange wiederholt, bis die gesamten 100 MB des Hauptschlüssels Mutter$ verwertet wurden. Die Aneinanderreihung der Teilstrings ZK$ 1, ZK$ 2, ZK$ 3, ZK$ 4, ZK$ 5 und so fort, ergibt im Ergebnis eine erste Zeichenkette Work$ 1, die wie der Hauptschlüssel Mutter$ eine Länge von 100 MB aufweist.

Diese erste Zeichenkette Work$ 1 wird nun nach dem in Fig. 5 näher beschriebenen Teilungsalgorithmus WV in zwei Teillängen True$, Untrue$ aufgespaltet und nachfolgend werden beide Teillängen True$, Untrue$ miteinander XOR codiert. Dies erfolgt dadurch, dass die kürzere Teillänge, im vorliegenden Beispiel True$, so oft aneinandergereiht wird, dass ihre Länge zumindest der längeren Teillänge, im vorliegenden Beispiel Untrue$, entspricht. Im Ergebnis entsteht dann eine zweite Zeichenkette Work$ 2, die die Länge der längeren Teillänge Untrue$ aufweist.

Selbstverständlich könnte anstatt einer XOR Codierung der beiden Teillängen True$, Untrue$ alternativ auch eine erweiterte XOR Codierung erfolgen, um die Angreifbarkeit des Hauptschlüssels Mutter$ weiter zu senken.

Anschließend wird die erste Zeichenkette Work$ 1 mit der zweiten Zeichenkette Work$2 logisch XOR codiert, wobei wiederum die zweite Zeichenkette Work$ 2 sooft aneinandergereiht wird, dass ihre Länge der der ersten Zeichenkette Work$ 1 entspricht. Im Ergebnis entsteht ein Codeschlüssel Code$, der wiederum die Länge des Hauptschlüssels Mutter$, also 100 MB aufweist.

Aus diesem Codeschlüssel Code$ wird der One-time-Pad Schlüssel OTP$ durch Größenreduktion generiert, der 32 Byte groß ist. Diese Größenreduktion erfolgt dadurch, dass der im Mischalgorithmus erzeugte Codeschlüssel Code$ mittels eines bestimmten Reduktionsalgorithmus von 100 MB auf 32 Byte reduziert wird. Dies kann beispielsweise dadurch erfolgen, dass die ersten 32 Byte von den 100 MB herausselektiert werden. Es sind aber natürlich auch andere Reduktionsalgorithmen verwendbar, solang diese reproduzierbar festgelegt sind.

In Fig. 5 ist rein schematisch der Teilungsalgorithmus WV aus Fig. 4 in einem Blockschaltbild dargestellt. Und zwar wird im Rahmen dieses Teilungsalgorithmus WV verglichen, welche in dem Sitzungsschlüssel ZZ$ enthaltenen Zeichen auch in der ersten Zeichenkette Work$ 1 enthalten sind. Diejenigen Zeichen, die in der ersten Zeichenkette Work$ 1 enthalten sind, werden in der Reihenfolge, die in dem Sitzungsschlüssel ZZ$ vorgegeben ist, in der ersten Teillänge True$ abgelegt. Andererseits werden diejenigen Zeichen der ersten Zeichenkette Work$ 1, die nicht in dem Sitzungsschlüssel ZZ$ enthalten sind, in derjenigen Reihenfolge, die in der erste Zeichenkette Work$ 1 vorgegeben ist, in der zweiten Teillänge Untrue$ abgelegt. Dieser Mischalgorithmus verhindert zusätzlich die Rückwärtsrechnung, die sonst bei einfachen XOR Codierungen unter Umständen möglich sein könnte. Natürlich kann auch eine andere Reihenfolge beim Erstellen der Teillängen True$, Untrue$ gewählt werden.

Bei den Schlüsseln Mutter$, ZZ$, V$, G$, P$ handelt es sich um alphanumerische Zeichenketten bestehend aus Buchstaben, Zahlen und Sonderzeichen, wobei alternativ natürlich auch nur rein binäre Zeichenfolgen Verwendung finden können.

Der Verwenderschlüssel V$ steht im vorliegenden Ausführungsbeispiel für den Namen eines bestimmten Herstellers. Der in Fig. 2b verwendete Gegenstandsschlüssel G$ setzt sich aus einer Vielzahl von Informationen zusammen, wie dies in Fig. 2b näher dargestellt ist. In diesem Beispiel ist gezeigt, dass die Gegenstandsschlüssel G$ Informationen zum Herstellungsdatum, der für die Ausfuhr vorgesehenen Zollstelle, nämlich im vorliegenden Fall Frankfurt a. Main, den Zwischenhändler im Empfängerland, das Empfängerland, darüber, ob es sich um eine Ausfuhr oder Einfuhr handelt, die Produktnummer und den Produktnamen enthält. Natürlich können hier auch andere Informationen über das Produkt hinterlegt sein.

Die solchermaßen hergestellte Originalkennung OK wird nun an dem Produkt angebracht, wobei beispielsweise bei Medikamenten eine erste Originalkennung OK auf der gemeinsamen Verpackung der Medikamente vorgesehen ist und auf jedem in der Verpackung enthaltenen Blister eine weitere, dazu unterschiedliche Originalkennung OK.

Der erste Teil OK1 der Originalkennung OK identifiziert dabei den Hersteller des Medikaments und gibt Rückschlüsse über den verwendeten ersten zufälligen Sitzungsschlüssel ZZ$. Der zweite Teil OK2 wiederum enthält Produktinformationen und ermöglicht eine Rückverfolgung zum Hersteller.

Beide Teile OK1, OK2 der Originalkennung OK haben gemeinsame und unverwechselbare Eigenschaften. Ihr Auftreten als Pärchen OK1, OK2 ist in dieser Form faktisch einmalig. Außerdem hat dieses Pärchen OK1, OK2 nur für einen einzigen Hersteller seine Gültigkeit. Die in dem zweiten Teil OK2 der Originalkennung OK verschlüsselte Produktinformation ist ein One-time-Pad und damit absolut fälschungssicher. Dabei können die Pärchen OK1, OK2 in Echtzeit beim Hersteller generiert werden und zeigen keine statistischen Merkmale, die eine Entschlüsselung ermöglichen würden. Der Zufallsraum Ω bezüglich der Erzeugung der Originalkennung OK beträgt Ω = 2³⁸⁴, wodurch sichergestellt ist, dass ohne Wechseln des Hauptschlüssels Mutter$ eine Vielzahl von Produkten mit einer Originalkennung OK versehen werden kann, ohne dass es zu Wiederholungen der Originalkennung OK kommt. Ein weiterer wesentlicher Vorteil besteht darin, dass einmal generierte Pärchen OK1, OK2 und somit die Originalkennungen OK zu keiner Zeit gespeichert werden müssen, da dem Hersteller sein eigener Verwenderschlüssel V$ bekannt ist und er so auf den ersten zufälligen Sitzungsschlüssel ZZ$ zurückrechnen kann und der Hersteller damit und mit Hilfe seines gespeicherten Hauptschlüssels Mutter$ aus dem zweiten Teil OK2 der Originalkennung OK den Gegenstandsschlüssel G$ zurückrechnen kann, um festzustellen, ob dieser Gegenstandsschlüssel G$ überhaupt sinnvoll ist und auch dem Produkt zugeordnet werden kann, nämlich beispielsweise hinsichtlich dessen Vertriebsweg.

Wie gesagt können bezüglich des Produkts mehrere Originalkennungen OK angebracht werden, nämlich beispielsweise eine erste Originalkennung OK auf der Verpackung, eine davon unterschiedliche zweite Originalkennung OK auf dem Blister und bei Bedarf auch eine dritte unterschiedliche Originalkennung OK auf dem Beipackzettel eines Medikaments. Dadurch dass es sich hier um unterschiedliche Originalkennungen OK handelt, wird die Fälschung noch aussichtsloser für den Plagiateur.

Anhand eines Beispiels soll im Folgenden verdeutlicht werden, warum die Fälschung von Originalkennungen für einen Plagiateur beispielsweise für Medikamente nicht sinnvoll ist. Dabei wird davon ausgegangen, dass eine Lieferung von Medikamenten des Namens ABC in den Kongo geliefert werden soll, wobei die Lieferung 4.000 Packungen des Medikaments aufweist. Auf jeder Verpackung sind unterschiedliche Originalkennungen OK angebracht und außerdem sind weitere unterschiedliche Originalkennungen noch auf den enthaltenen Blistern sowie auf den Beipackzetteln vorgesehen. Wenn nur ein Blister pro Verpackung enthalten ist, dann sind bezüglich der Lieferung 12.000 also unterschiedliche Originalkennungen OK vorhanden.

Ein Fälscher, der nun eine gefälschte Lieferung dieses Medikaments auf den Markt bringen will, hätte nun verschiedene Möglichkeiten. So könnte er überhaupt keine Originalkennungen OK anbringen. Dies würde man aber sofort beim Zoll erkennen. Damit könnten solche Lieferungen sofort aus dem Verkehr gezogen werden.

Weiterhin könnte er statt der Originalkennungen OK reine Phantasiekennungen anbringen. Dies würde man nach einer Entschlüsselung als Fälschung erkennen. Hierzu könnte entweder der Zoll beim Hersteller um Mithilfe bitten, wonach dann der Hersteller rückrechnet, ob die angebrachten Originalkennungen OK sinnvoll sind. Alternativ könnten dem Zoll vom Hersteller auch spezielle Entschlüsselungsgeräte zur Verfügung gestellt werden, die den auslesegesicherten Hauptschlüssel Mutter$ und den ggf. ebenfalls auslesegesicherten Verwenderschlüssel V$ enthalten. Damit könnte dann beim Zoll direkt überprüft werden, ob die Codes Fälschungen sind.

Weiterhin könnte der Plagiateur sich einige echte Originalkennungen OK beschaffen und diese wahllos auf der Lieferung anbringen. Dies würde dazu führen, dass beim Überprüfen der Originalkennungen OK nach einigen Stichproben festgestellt werden würde, dass hier gleiche Originalkennungen OK vorliegen, was aber nicht sein kann, so dass es sich um eine Fälschung handeln muss. Andererseits wird auch der in den Originalkennungen OK enthaltene Gegenstandsschlüssel G$ beispielsweise nicht mit den Vertriebsmodalitäten des Produkts übereinstimmen.

Schließlich könnte der Plagiateur sich auch beispielsweise 3.000 echte Originalkennungen OK beschaffen und diese anbringen. In diesem Fall würde allerdings wiederum die Produktinformation in dem Gegenstandsschlüssel G$ nicht stimmen, da beispielsweise das Herstellungsdatum, das in dem Gegenstandsschlüssel G$ enthalten ist, nicht mit dem Mindesthaltbarkeitsdatum in Einklang stehen und dgl. Im Übrigen würde die Beschaffung einer solch großen Menge von Originalkennungen OK beim Plagiateur sehr hohe Kosten verursachen, so dass diese Beschaffung in Bezug auf den erzielten Gewinn wirtschaftlich nicht sinnvoll ist. Außerdem würde eine solche Fälschung auch dadurch erkannt werden, dass mehrfach das gleiche Produkt mit der gleichen Produktnummer gehandelt werden würde, was wiederum nicht möglich ist.

Noch einen weiteren Vorteil weisen die erfindungsgemäßen Originalkennungen OK auf. Sollten nämlich alle Originalkennungen OK und zudem auch noch die Produkte selbst echt sein, dann würde sofort erkannt werden, dass es sich um einen gegebenenfalls illegalen Reimport handelt, da der Gegenstandsschlüssel G$ hinsichtlich der Angabe Ausfuhr oder Einfuhr nicht korrekt ist.

Wesentlich ist, dass die erfindungsgemäße Originalkennung nicht nur für Produkte, wie Medikamente, Ersatzteile oder dgl., eingesetzt werden kann, sondern auch für Urkunden, Zertifikate, amtliche Siegel, beispielsweise TÜV-Siegel, und dgl. Die Produktinformationen sind auch nicht auf Gegenstandsschlüssel G$ von 32 Byte und die Verwenderschlüssel V$ auch nicht auf 16 Byte beschränkt, sondern können maximal der Größe des Hauptschlüssel Mutter$ entsprechen, also im vorliegenden Beispiel 100 MB groß sein, wobei der Hauptschlüssel Mutter$ natürlich auch beliebig größer gewählt werden kann. Dies ist alles nur eine Frage der verfügbaren Rechenkapazität.

Besonders vorteilhaft bei der erfindungsgemäßen Originalkennung OK ist es, dass das Verfahren zur Herstellung der Originalkennung OK ein sehr schnelles Verfahren ist und die Originalkennung OK sehr kostengünstig vorgesehen werden kann, beispielsweise mittels eines einfachen Aufdrucks. Alternativ kann die Originalkennung natürlich auch elektronisch abgelegt werden, beispielsweise in einem RFID-Chip, einem RAM, einen ROM oder dgl.

Das Verfahren ist zudem sehr flexibel und die Originalkennungen OK können jederzeit geändert werden, indem die Produktinformation im Produktschlüssel P$ geändert wird, der Verwenderschlüssel V$ und/oder der Hauptschlüssel Mutter$. Außerdem sind die der Originalkennung OK zugrunde liegenden Informationen für Niemanden einsehbar, sondern nur die Originalkennungen OK selbst.

Die verwendeten Originalkennungen OK können jederzeit leicht direkt beim Hersteller selbst abgefragt werden oder mittels vom Hersteller autorisierter Lesegeräte, die kein Sicherheitsrisiko darstellen, da die in den Lesegeräten enthaltenen Hauptschlüssel Mutter$ und Verwenderschlüssel V$ nicht ausgelesen werden können, wozu geeignete Maßnahmen zu ergreifen sind.

Eine Abfrage der Originalkennung OK kann beispielsweise mittels Handy erfolgen, indem die Originalkennung OK fotografiert und an den Hersteller übermittelt wird. Aber auch im Internet könnte ein Hersteller eine Kontrollmöglichkeit für seine Originalkennungen OK anbieten.

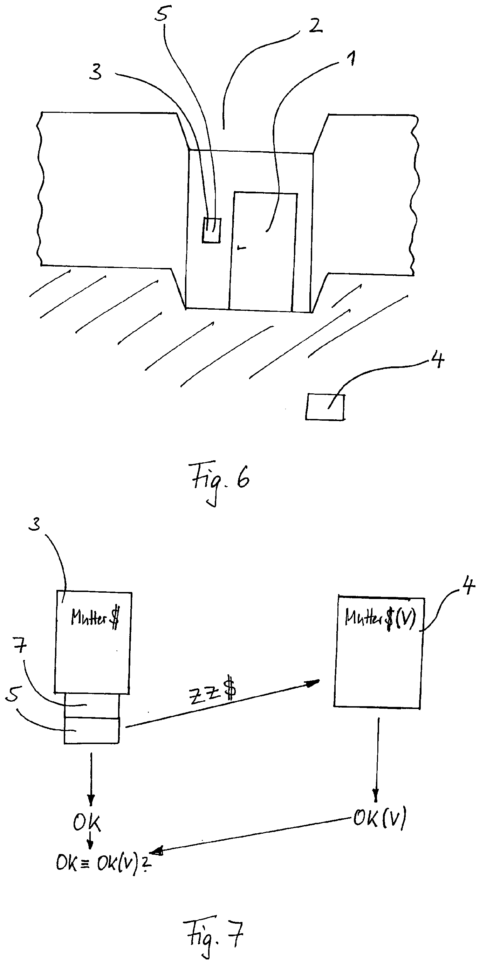

Wesentlich ist außerdem, dass nicht nur das Fälschen innerhalb einer legalen Handelskette verhindert wird, sondern auch geschmuggelte Ware wird sicher als Fälschung erkannt.
In einer zweiten bevorzugten Ausgestaltung gemäß Fig. 6 und Fig. 7 wird die erfindungsgemäße Originalkennung zur Autorisierung der Zugangsberechtigung für einen Zugang 1 zu einem gesicherten Bereich 2 verwendet. Der Zugang ist in diesem Falle eine Tür 1, die nach entsprechender Autorisierung durch einen Verwender (nicht gezeigt) geöffnet werden kann, um zu dem gesicherten Bereich 2 Zutritt zu erlangen, wobei der gesicherte Bereich 2 beispielsweise ein Kassenbereich einer Bank oder dgl. ist.

Dem Zugang 1 ist eine Überprüfungsvorrichtung 3 zugeordnet, die einen Autorisierungsvorgang des Verwenders überprüft und ggf. bei erfolgreicher Autorisierung den Zugang 1 für den Verwender freigibt. Zur Durchführung des Autorisierungsvorganges benutzt der Verwender ein erstes elektronisches Mittel 4, das so ausgebildet ist, dass es mit einem zweiten elektronischen Mittel 5, das der Überprüfungseinrichtung 3 zugeordnet ist, kommunizieren kann. Das erste und zweite elektronische Mittel 4, 5 weisen dazu beispielsweise Funk- und Empfangsmittel oder dgl. auf.

In Fig. 6 ist nun rein schematisch der Autorisierungsvorgang dargestellt. Sowohl die Überprüfungsvorrichtung 3 als auch das erste elektronische Mittel 4 beinhalten den Hauptschlüssel Mutter$, der beispielsweise in einem ROM hinterlegt und gegenüber unberechtigtem Ausleseversuch gesichert ist. Weiterhin weist die Überprüfungsvorrichtung 3 eine Zufallsquelle auf, die beispielsweise als Zufallsgenerator 7 ausgebildet ist.

Nach dem der Verwender mit Hilfe des ersten elektronischen Mittels 4 sich bei der Überprüfungsvorrichtung 3 bemerkbar gemacht hat, stellt die Überprüfungsvorrichtung 3 mit Hilfe des Zufallszahlengenerators 7 einen Sitzungsschlüssel ZZ$ bereit, den es an das erste elektronische Mittel 4 übermittelt. Das erste elektronische Mittel 4 erzeugt aus dem gespeicherten Hauptschlüssel Mutter$ und dem Sitzungsschlüssel Z$ nach dem erfindungsgemäßen Verfahren eine Originalkennung OK(V), wobei V in diesem Fall für den Verwender steht. Diese Originalkennung OK(V) wird an die Überprüfungsvorrichtung 3 kommuniziert. Die Überprüfungsvorrichtung 3 erzeugt ebenfalls aus dem hinterlegten Hauptschlüssel Mutter$ und dem übermittelten Sitzungsschlüssel ZZ$ nach dem erfindungsgemäßen Verfahren eine Originalkennung OK.

Anschließend stellt die Überprüfungsvorrichtung 3 fest, ob die eigene erzeugte Originalkennung OK identisch ist mit der von dem ersten elektronischen Mittel 4 übermittelten Originalkennung OK(V). Wenn dies der Fall ist, dann gibt die Überprüfungsvorrichtung 3 den Zugang 1 für den Verwender frei. Falls keine Identität vorliegt, dann gibt die Überprüfungsvorrichtung 3 den Zugang 1 nicht frei und es kann ggf. vorgesehen werden, dass sogleich ein Alarm ausgelöst wird und/oder der Verwender optisch registriert wird.

Falls mehrere unterschiedlich berechtigte Verwender für den Zugang 1 vorgesehen sind, kann es sinnvoll sein, nicht den Sitzungsschlüssel ZZ$ selbst an das erste elektronische Mittel 4 zu kommunizieren, sondern den Sitzungsschlüssel ZZ$ mit Hilfe eines Verwenderschlüssels V$ und/oder Gegenstandsschlüssels G$ zu verschlüsseln und dieses verschlüsselte Ergebnis an das erste elektronische Mittel 4 zu kommunizieren. Hierzu würde das erste elektronische Mittel 4 beim Beginn des Autorisierungsvorganges mit Hilfe eines vorgesehenen Codes der Überprüfungsvorrichtung 3 mitteilen, welcher Verwender Zutritt zu dem Zugang 1 begehrt und die Überprüfungsvorrichtung 3 würde den entsprechenden Verwenderschlüssel zur Verschlüsselung des Sitzungsschlüssels ZZ$ benutzen.

Nur wenn das erste elektronische Mittel 4 den identischen Verwenderschlüssel V$ und/oder Gegenstandsschlüssels G$ aufweist, kann das erste elektronische Mittel 4 durch Entmischung den zufälligen Sitzungsschlüssel ZZ$ stimmen und damit mit Hilfe des Hauptschlüssels Mutter$(V) die erforderliche Originalkennung OK(V) erzeugen.

In allen Fällen, in denen das erste elektronische Mittel nicht den korrekten Hauptschlüssel Mutter$ (V) aufweist, der identisch mit den in der Überprüfungseinrichtung 3 abgespeicherten Hauptschlüssel Mutter$ ist und ggf. der Verwenderschlüssel V$ und/oder Gegenstandsschlüssels G$ nicht mit dem in der Überprüfungseinrichtung 3 für den Verwender hinterlegten Verwenderschlüssel V$ und/oder Gegenstandsschlüssels G$ übereinstimmt, findet keine erfolgreiche Autorisierung statt und der Zugang 1 bleibt für den Verwender verschlossen, da die erzeugten Originalkennungen OK, OK(V) nicht identisch sind.

Alternativ kann auch vorgesehen sein, dass der Sitzungsschlüssel ZZ$ dem ersten elektronischen Mittel 4 nicht verschlüsselt übermittelt wird, sondern dass in dem ersten elektronischen Mittel 4 ein Verwenderschlüssel V$ und/oder Gegenstandsschlüssel G$ abgelegt ist und damit mit dem erfindungsgemäßen Verfahren die Originalkennung OK(V) erzeugt wird. In diesem Falle würde die Überprüfungsvorrichtung 3, in der alle zugangsberechtigten Verwenderschlüssel V$ bzw. Gegenstandsschlüssel G$ hinterlegt sind, alle möglichen Originalkennungen OK durchrechnen und überprüfen, ob die übermittelte Originalkennung OK(V) mit einer dieser möglichen Originalkennungen OK identisch ist und den Zugang 1 öffnen.

Vorliegend ist die Zufallsquelle 7 der Überprüfungsvorrichtung 3 zugeordnet. Alternativ kann natürlich auch vorgesehen sein, dass die Zufallsquelle 7 dem ersten elektronischen Mittel 4 zugeordnet ist und der damit erzeugte Sitzungsschlüssel ZZ$ an die Überprüfungsvorrichtung 3 übermittelt wird, wonach dann sowohl die Überprüfungsvorrichtung 3 als auch das erste elektronische Mittel 4 jeweils die Originalkennung OK, OK(V) erzeugen und die Überprüfungsvorrichtung 3 feststellt, ob Identität vorliegt.

Im beschrieben Beispiel ist der Zugang 1 eine Tür zu einem gesicherten Bereich 2, der beispielsweise in einem Haus angeordnet ist. Alternativ kann natürlich auch vorgesehen sein, dass es sich um einen Zugang zu einem Automobil handelt, wobei dann das erste elektronische Mittel 4 in einer Funkentriegelung integriert ist.

Unabhängig von solchen rein körperlichen Zugängen 1 kann es sich auch um einen reinen Informationszugang bzw. elektronischen Zugang handeln, beispielsweise also um den Zugang zu gesicherten Strukturen einer Datenverarbeitungsanlage oder einem gesicherten Softwarebereich auf einer solchen Datenverarbeitungsanlage.

Auch jegliche anderen Arten von Zugängen lassen sich mit Hilfe der erfindungsgemäßen Originalkennung OK und des erfindungsgemäßen Verfahrens zur Erzeugung dieser Originalkennung OK gegenüber einem unbefugten Zugriff absichern.

Bei der Beschreibung der bevorzugten Ausführungsbeispiele wurde davon ausgegangen, dass die Zufallsquelle ein Zufallszahlengenerator 7 ist. Alternativ kann natürlich auch jede andere Art von Zufallsquelle verwendet werden. Solche Quellen können beispielsweise die Oberflächenbeschaffenheit, insbesondere Rauheiten von bestimmten Oberflächen sein. Andererseits können auch bestimmte Farbwerte einer Fläche oder eines Gegenstandes zur Erzeugung einer Zufallszahl verwendet werden, oder es werden dazu Kontrastverhältnisse verwendet.

Die Originalkennung OK muss auch nicht als alphanumerische Zeichenfolge, Barcode oder dgl. abgebildet oder als Binärcode elektronisch gespeichert bzw. übertragen werden. Alternativ könnte die Originalkennung OK auch als ein- oder zweidimensionaler Farb- oder Kontrastwerte, als Hologramm und mittels besonderer Farben oder dgl. ggf. auch unsichtbar dargestellt werden.

Bezüglich der Generierung des Hauptschlüssels Mutter$ und des Sitzungsschlüssels ZZ$ zu deren Bereitstellung für das Verfahren wird auf die deutsche Patentanmeldung DE 10 2008 033 162 verwiesen und ihr Inhalt hiermit auch vollständig mit einbezogen. Diese Patentanmeldung beschreibt ausführlich, wie Zufallszahlen mit extrem hoher statistischer Qualität als physikalische Zufallszahlen erzeugt werden können. Alternativ können diese Schlüssel Mutter$, ZZ$ auch kostengünstig als Pseudozufallszahl erzeugt werden.

Wesentlich an dem erfindungsgemäßen Verfahren zur Erzeugung der Originalkennung OK und der erfindungsgemäßen Originalkennung OK sowie den Verwendungen dieser Originalkennung ist, dass dies auf einem besonders einfach und effizient erzeugbaren One-Time-Pad beruht, wodurch gewährleistet ist, dass auch beispielsweise bei einem Abfangen des Sitzungsschlüssels ZZ$ bei der Zugangsautorisierung nichtberechtigte Verwender die Autorisierung nicht vornehmen können, weil sie den Hauptschlüssel Mutter$ nicht bestimmen können.

Im Gegensatz zur erfindungsgemäßen Originalkennung OK waren bisherige Produktkennzeichnungen im großen Stil fälschbar, da sie nicht einzigartig sind. Und für den Fall, dass die Produktkennzeichnung eine Vielzahl von Sicherheitsmerkmalen enthält, konnte eine Fälschung nur mit Hilfe von speziell ausgebildeten Fachleuten ermittelt werden.

Mit der erfindungsgemäßen Originalkennung OK kann jedem Produkt ohne weiteres eine einzigartige Originalkennung OK zugeordnet werden und eine Überprüfung auf Originalität ist nicht nur speziell ausgebildeten Fachleuten vorbehalten, sondern kann ohne weiteres beim Hersteller selbst mit Hilfe einer Hotline oder dgl. oder mit Hilfe von durch den Hersteller autorisierter Geräte beim Zoll oder ähnlichen Einrichtungen ohne weitere Ausbildung mühelos erfolgen.

Aus dem vorstehenden ist klar geworden, dass die vorliegende Erfindung eine Originalkennung bereitstellt, die Produktfälschungen weitgehend verhindert, wobei die Originalkennung in ihrer Herstellung sehr kostengünstig ist. Die erfindungsgemäße Originalkennung eignet sich dabei nicht nur zur Verwendung als Produktkennzeichnung, sondern auch zum Autorisierungsnachweis, beispielsweise bei der Sicherung von räumlichen oder elektronischen Zugängen, wie Türen, Computerprogrammen und dgl.

## Patentansprüche

1. Verfahren zur Bereitstellung einer Originalkennung (OK) für einen Gegenstand, wie ein Produkt, für eine Autorisierung für einen Zugang (1) oder dgl., wobei das Verfahren die folgenden Schritte umfasst:
a) zur Verfügung stellen eines Hauptschlüssels (Mutter$),
b) Erzeugung eines ersten zufälligen Sitzungsschlüssels (ZZ$) und
c) Mischen des Hauptschlüssels (Mutter$) mit dem ersten zufälligen Sitzungsschlüssel (ZZ$)
d) zur Verfügung stellen eines Gegenstandsschlüssels (G$) und
e) Mischen des Gegenstandsschlüssels (G$) mit dem Ergebnis von Schritt c), wobei bevorzugt weiterhin das Ergebnis von Schritt c) oder Schritt d) auf eine dem Gegenstandsschlüssel (G$) entsprechende Länge mit einem vorgegebenen Reduktionsalgorithmus reduziert wird,
wobei weiterhin folgende Schritte vorgenommen werden:
i) das Ergebnis aus Schritt c) oder e) in zwei Teillängen (True$, Untrue$) aufgeteilt wird, wobei eine Teillänge (Untrue$) mit der anderen Teillänge (True$) gemischt wird, wobei eine der beiden Teillängen (True$) nur Zeichen oder Bit-Folgen enthält, die in einem bereitgestellten zweiten zufälligen Sitzungsschlüssel (ZZ$) enthalten sind, und die andere der beiden Teillängen (Untrue$) nur Zeichen oder Bit-Folgen enthält, die nicht in dem zweiten zufälligen Sitzungsschlüssel (ZZ$) enthalten sind, wobei insbesondere der erste zufällige Sitzungsschlüssel und der zweite zufällige Sitzungsschlüssel als identische zufällige Sitzungsschlüssel (ZZ$) bereitgestellt werden, und
j) das Ergebnis aus Schritt c) oder e) wird mit dem Ergebnis von Schritt i) gemischt.

2. Verfahren nach Anspruch 1, **dadurch gekennzeichnet, dass** in Schritt b) der erste zufällige Sitzungsschlüssel einem Verwender als Ergebnis der Mischung des ersten zufälligen Sitzungsschlüssels und einem ersten Verwenderschlüssel bereitgestellt wird, dem Verwender ein Verwenderschlüssel zugeteilt wurde und der erste zufällige Sitzungsschlüssel durch Entmischen des Ergebnisses mit dem dem Verwender vorliegenden Verwenderschlüssel bestimmt wird.

3. Verfahren nach einem der vorherigen Ansprüche, **dadurch gekennzeichnet, dass** weiterhin folgende Schritte vorgenommen werden:
f) zur Verfügung stellen eines zweiten Verwenderschlüssel (V$), der bevorzugt identisch dem ersten Verwenderschlüssel ist und der charakteristisch ist für die Benutzung der Originalkennung (OK), insbesondere dessen Verwender,
g) Erzeugung einer Kennung (K$) durch Mischung des ersten zufälligen Sitzungsschlüssels (ZZ$) und des zweiten Verwenderschlüssel (V$) und
h) Verbindung der Ergebnisse (P$, OK2) von Schritt c) oder Schritt e) und der Kennung (K$, OK1) zur Originalkennung (OK), wobei bevorzugt die Kennung (OK1) dem Ergebnis (P$, OK2) voran- oder nachgestellt wird.

4. Verfahren nach einem der vorherigen Ansprüche, **dadurch gekennzeichnet, dass** das Mischen als logische XOR-Codierung, bevorzugt logisch erweiterte XOR-Codierung erfolgt.

5. Verfahren nach einem der vorherigen Ansprüche, **dadurch gekennzeichnet, dass** der erste zufällige Sitzungsschlüssel, der zweite zufällige Sitzungsschlüssel (ZZ$), der erste Verwenderschlüssel, der zweite Verwenderschlüssel (V$) und/oder der Gegenstandsschlüssel (G$) größer als 1 Bit, bevorzugt ≥ 24 Byte und insbesondere ≥ 34 Byte groß gewählt werden und/oder dass der Hauptschlüssel (Mutter$) größer als 100 Byte, bevorzugt ≥ 1 MByte und insbesondere ≥ 100 MByte gewählt wird.

6. Verwendung der Originalkennung (OK) nach einem der vorherigen Ansprüche für die Kennzeichnung eines Produktes oder dgl., **dadurch gekennzeichnet, dass** der Hauptschlüssel und ggf. der erste und/oder zweite Verwenderschlüssel an einer Überprüfungsvorrichtung hinterlegt sind und zur Überprüfung der Originalkennung (OK) auf Echtheit bestimmt wird, ob die Originalkennung (OK) unter Verwendung des hinterlegten Hauptschlüssels (Mutter$) und ggf. des hinterlegten ersten und/oder zweiten Verwenderschlüssels (V$) nach einem Verfahren der vorhergehenden Ansprüche erzeugbar ist.

7. Verwendung nach Anspruch 6, **dadurch gekennzeichnet, dass** überprüft wird, ob der in der Originalkennung (OK) verwendete Gegenstandsschlüssel (G$) mit den Angebots-, Vertriebs- und/oder Verkaufsmodalitäten und dgl. für das Produkt oder dgl., insbesondere mit dem für das Produkt oder dgl. festgestellten Vertriebsweg übereinstimmt.

8. Verwendung nach Anspruch 6 oder 7, **dadurch gekennzeichnet, dass** das Produkt oder dgl. in einer Verpackung angeordnet ist, wobei zumindest eine erste Originalkennung (OK) auf dem Produkt oder dgl. und zumindest eine zweite Originalkennung, die sich von der ersten Originalkennung unterscheidet, auf der Verpackung vorgesehen sind.

9. Verwendung der Originalkennung (OK) nach einem der Ansprüche 1 bis 5 für die Autorisierung der Zugangsberechtigung zu einem Zugang (1), insbesondere zu einem Bereich, einem Fahrzeug, einem Programm und dgl., **dadurch gekennzeichnet, dass** der Hauptschlüssel (Mutter$) und ggf. der erste und/oder zweite Verwenderschlüssel (V$) an einer dem Zugang (1) zugeordneten Überprüfungsvorrichtung (3) hinterlegt sind und die Originalkennung (OK(V)) von der den Zugang nachsuchenden Person oder nachsuchenden Vorrichtung bereitgehalten wird, wobei zur Überprüfung der Zugangsberechtigung zu dem Zugangs (1) durch die Überprüfungsvorrichtung (3) bestimmt wird, ob die Originalkennung (OK(V)) unter Verwendung des hinterlegten Hauptschlüssels (Mutter$) und ggf. des hinterlegten ersten und/oder zweiten Verwenderschlüssels (V$) nach einem Verfahren gemäß der Ansprüche 1 bis 5 erzeugbar ist.

10. Verwendung nach Anspruch 9, **dadurch gekennzeichnet, dass** zumindest die Schritte a) und c) in einem ersten elektronischen Mittel (4) durchgeführt werden, das der nachsuchenden Person oder der nachsuchenden Vorrichtung zugeordnet ist, wobei bevorzugt ein dem Zugang (1) zugeordnetes zweites elektronisches Mittel (5) Schritt b) ausführt und den Sitzungsschlüssel (ZZ$) oder das Ergebnis der Mischung von erstem zufälligem Sitzungsschlüssel und ersten Verwenderschlüssel zur Durchführung von Schritt c) an das erste elektronische Mittel (4) übermittelt.

11. Originalkennung hergestellt nach dem Verfahren nach einem der Ansprüche 1 bis 5, **dadurch gekennzeichnet, dass** die Originalkennung ein Barcode, insbesondere 1- oder 2-dimensionaler Barcode, oder eine Oberflächenstrukturierung ist oder in einem elektronischen Speicher, insbesondere einem RFID-Chip angeordnet ist.

12. Computerprogrammprodukt, das auf einem für einen Computer lesbaren Medium gespeichert ist, umfassend für den Computer lesbare Programmmittel, die den Computer veranlassen, ein Verfahren nach einem der Ansprüche 1 bis 5, insbesondere im Rahmen einer Verwendung nach einem der Ansprüche 6 bis 10 auszuführen, wenn die Programmmittel auf dem Computer ausgeführt werden.

## Claims

1. Method for providing a unique identifier (OK) for an object, such as a product, for authorising access (1) or the like, wherein the method comprises the following steps:
a) providing a main key (Mutter$),
b) generating a first random session key (ZZ$) and
c) mixing the main key (Mutter$) with the first random session key (ZZ$)
d) providing an object key (G$) and
e) mixing the object key (G$) with the result of step c), wherein the result of step c) or step d) is furthermore preferably reduced, by means of a specified reduction algorithm, to a length corresponding to the object key (G$),
wherein the following steps are furthermore carried out:
i) the result of step c) or e) is split into two partial lengths (True$, Untrue$), wherein one partial length (Untrue$) is mixed with the other partial length (True$), wherein one of the two partial lengths (True$) contains only numbers or bit sequences that are contained in a provided second random session key (ZZ$), and the other of the two partial lengths (Untrue$) contains only numbers or bit sequences that are not contained in the second random session key (ZZ$), wherein in particular the first random session key and the second random session key are provided as identical random session keys (ZZ$), and
j) the result of step c) or e) is mixed with the result of step j).

2. Method according to claim 1, **characterised in that,** in step b), the first random session key is provided to a user as the result of mixing the first random session key and a first user key, the user is given a user key, and the first random session key is determined by unmixing the result by means of the user key available to the user.

3. Method according to either of the preceding claims, **characterised in that** the following steps are furthermore carried out:
f) providing a second user key (V$) that is preferably identical to the first user key and that is characteristic of the use of the unique identifier (OK), in particular the user thereof,
g) generating an identifier (K$) by mixing the first random session key (ZZ$) and the second user key (V$), and
h) combining the results (P$, OK2) from step c) or step e) and the identifier (K$, OK1) to form the unique identifier (OK), the identifier (OK1) preferably preceding or following the result (P$, OK2).

4. Method according to any of the preceding claims, **characterised in that** the mixing is carried out as logical XOR coding, preferably as logically advanced XOR coding.

5. Method according to any of the preceding claims, **characterised in that** the first random session key, the second random session key (ZZ$), the first user key, the second user key (V$) and/or the object key (G$) is selected so as to be larger than 1 bit, preferably ≥ 24 bytes and in particular ≥ 34 bytes, and/or in that the main key (Mutter$) is selected so as to be larger than 100 bytes, preferably ≥ 1 megabyte and in particular ≥ 100 megabytes.

6. Use of the unique identifier (OK) according to any of the preceding claims for identifying a product or the like, **characterised in that** the main key and optionally the first and/or second user key are stored on a verification device and it is determined, for verifying the authenticity of the unique identifier (OK), whether the unique identifier (OK) can be generated using the stored main key (Mutter$) and optionally the stored first and/or second user key (V$) according to a method of the preceding claims.

7. Use according to claim 6, **characterised in that** a verification is made as to whether the object key (G$) used in the unique identifier (OK) matches the supply, distribution and/or selling arrangements and the like for the product or the like, in particular the distribution channel specified for the product or the like.

8. Use according to either claim 6 or claim 7, **characterised in that** the product or the like is arranged in packaging, wherein at least one first unique identifier (OK) is provided on the product or the like, and at least one second unique identifier, which differs from the first unique identifier, is provided on the packaging.

9. Use of the unique identifier (OK) according to any of claims 1 to 5 for authorising the access authorisation to access (1), in particular to a region, a vehicle, a program and the like, **characterised in that** the main key (Mutter$) and optionally the first and/or second user key (V$) are stored on a verification device (3) assigned to the access (1), and the unique identifier (OK(V)) is held ready by the person or device seeking access, wherein it is determined by the verification device (3), in order to verify the access authorisation to access (1), whether the unique identifier (OK(V)) can be generated using the stored main key (Mutter$) and optionally the stored first and/or second user key (V$), according to a method according to claims 1 to 5.

10. Use according to claim 9, **characterised in that** at least steps a) and c) are carried out in a first electronic means (4) that is associated with the seeking person or device, wherein a second electronic means (5) associated with the access (1) preferably executes step b) and transmits to the first electronic means (4) the session key (ZZ$) or the result of mixing the first random session key and the first user key for carrying out step c).

11. Unique identifier produced according to a method according to any of claims 1 to 5, **characterised in that** the unique identifier is a barcode, in particular a one- or two-dimensional barcode, or a surface patterning, or is arranged in an electronic memory, in particular an RFID chip.

12. Computer program product, which is stored on a computer-readable medium, comprising computer-readable program means causing the computer to execute a method according to any of claims 1 to 5, in particular within the context of a use according to any of claims 6 to 10, when the program means are executed on the computer.

## Revendications

1. Procédé de génération d'un code original (OK) pour un objet, tel qu'un produit, pour une autorisation relative à un accès (1) ou similaire, le procédé comprenant les étapes suivantes :
a) mise à disposition d'une clé principale (Mutter$),
b) génération d'une première clé de session aléatoire (ZZ$) et
c) mélange de la clé principale (Mutter$) avec la première clé de session aléatoire (ZZ$)
d) mise à disposition d'une clé d'objet (G$) et
e) mélange de la clé d'objet (G$) avec le résultat de l'étape c), le résultat de l'étape c) ou l'étape d) étant de préférence en outre réduit à une longueur correspondant à la clé d'objet (G$) avec un algorithme de réduction prédéfini,
les étapes suivantes étant en outre effectuées :
i) le résultat de l'étape c) ou e) est divisé en deux longueurs partielles (True$, Untrue$), une longueur partielle (Untrue$) étant mélangée avec l'autre longueur partielle (True$), une des deux longueurs partielles (True$) ne contenant que des signes ou des séquences de bits, qui sont contenus dans une seconde clé de session aléatoire (ZZ$) mise à disposition, et l'autre des deux longueurs partielles (Untrue$) ne contenant que des signes ou des séquences de bits qui ne sont pas contenus dans la seconde clé de session aléatoire (ZZ$), la première clé de session aléatoire et la seconde clé de session aléatoire étant en particulier mises à disposition comme clés de session aléatoires (ZZ$) identiques, et
j) le résultat de l'étape c) ou e) est mélangé avec le résultat de l'étape i).

2. Procédé selon la revendication 1, **caractérisé en ce que,** dans l'étape b), la première clé de session aléatoire est mise à la disposition d'un utilisateur comme résultat du mélange de la première clé de session aléatoire et d'une première clé d'utilisateur, une clé d'utilisateur a été attribuée à l'utilisateur et la première clé de session aléatoire est déterminée en dissociant le résultat d'avec la clé d'utilisateur soumise à l'utilisateur.

3. Procédé selon l'une des revendications précédentes, **caractérisé en ce que** les étapes suivantes sont en outre effectuées :
f) mise à disposition d'une seconde clé d'utilisateur (V$), qui est de préférence identique à la première clé d'utilisateur et qui est caractéristique pour l'utilisation du code original (OK), en particulier pour son utilisateur,
g) génération d'un code (K$) en mélangeant la première clé de session aléatoire (ZZ$) et la seconde clé d'utilisateur (V$) et
h) combinaison des résultats (P$, OK2) de l'étape c) ou l'étape e) et du code (K$, OK1) pour former le code original (OK), le code (OK1) étant de préférence placé devant ou derrière le résultat (P$, OK2).

4. Procédé selon l'une des revendications précédentes, **caractérisé en ce que** le mélange est effectué sous la forme d'un cryptage logique XOR, de préférence d'un cryptage XOR étendu logique.

5. Procédé selon l'une des revendications précédentes, **caractérisé en ce que** la première clé de session aléatoire, la seconde clé de session aléatoire (ZZ$), la première clé d'utilisateur, la seconde clé d'utilisateur (V$) et/ou la clé d'objet (G$) sont sélectionnées d'une longueur supérieure à 1 bit, de préférence ≥ 24 octets et en particulier ≥ 34 octets et/ou **en ce que** la clé principale (Mutter$) est sélectionnée d'une longueur supérieure à 100 octets, de préférence ≥ 1 Mo et en particulier ≥ 100 Mo.

6. Utilisation du code original (OK) selon l'une des revendications précédentes pour le marquage d'un produit ou similaire, **caractérisée en ce que** la clé principale et le cas échéant la première et/ou seconde clé d'utilisateur sont enregistrées sur un dispositif de vérification et, pour la vérification de l'authenticité du code original (OK), on détermine si le code original (OK) peut être généré en utilisant la clé principale (Mutter$) enregistrée et le cas échéant la première et/ou seconde clé d'utilisateur (V$) enregistrée d'après un procédé selon les revendications précédentes.

7. Utilisation selon la revendication 6, **caractérisée en ce que** l'on vérifie si la clé d'objet (G$) utilisée dans le code original (OK) correspond aux modalités d'offre, de distribution et/ou de vente et similaires pour le produit ou similaire, en particulier au circuit de distribution défini pour le produit ou similaire.

8. Utilisation selon la revendication 6 ou 7, **caractérisée en ce que** le produit ou similaire est disposé dans un emballage, au moins un premier code original (OK) étant prévu sur le produit ou similaire et au moins un second code original, qui est différent du premier code original, étant prévu sur l'emballage.

9. Utilisation du code original (OK) selon l'une des revendications 1 à 5 pour l'autorisation du droit d'accès relatif à un accès (1), en particulier à une zone, un véhicule, un programme et similaire, **caractérisée en ce que** la clé principale (Mutter$) et le cas échéant la première et/ou seconde clé d'utilisateur (V$) sont enregistrées sur un dispositif de vérification (3) associé à l'accès (1) et le code original (OK(V)) de la personne ou du dispositif demandant l'accès étant tenu à disposition, le dispositif de vérification (3) déterminant pour la vérification du droit d'accès relatif à l'accès (1), si le code original (OK(V)) peut être généré en utilisant la clé principale (Mutter$) enregistrée et le cas échéant la première et/ou seconde clé d'utilisateur (V$) enregistrée d'après un procédé selon les revendications 1 à 5.

10. Utilisation selon la revendication 9, **caractérisée en ce qu'au** moins les étapes a) et c) sont exécutées dans un premier moyen électronique (4), qui est associé à la personne ou au dispositif demandant l'accès, un second moyen électronique (5) associé à l'accès (1) exécutant de préférence l'étape b) et transmettant la clé de session (ZZ$) ou le résultat du mélange de la première clé de session aléatoire et de la première clé d'utilisateur au premier moyen électronique (4) pour exécuter l'étape c).

11. Code original généré d'après le procédé selon l'une des revendications 1 à 5, **caractérisé en ce que** le code original est un code-barres, en particulier un code-barres unidimensionnel ou bidimensionnel, ou est une structure de surface ou est disposée dans une mémoire électronique, en particulier une puce RFID.

12. Produit-programme informatique, qui est enregistré sur un support lisible par un ordinateur, comprenant des moyens de programme lisibles par l'ordinateur, qui amènent l'ordinateur à exécuter un procédé selon l'une des revendications 1 à 5, en particulier dans le cadre d'une utilisation selon l'une des revendications 6 à 10, quand les moyens de programme sont exécutés sur l'ordinateur.
